# EUROPÄISCHE PATENTSCHRIFT

(11) **EP 4 171 439 B1**
(45) Veröffentlichungstag und Bekanntmachung des Hinweises auf die Patenterteilung: **01.01.2025**
(21) Anmeldenummer: 21805458.3
(22) Anmeldetag: 02.11.2021
(51) Int. Cl.: A61C 17/06, B04B 1/02, B04B 11/06, B04B 7/04, B04B 7/02

(54) **ABSCHEIDER MIT HERAUSNEHMBAREM ZENTRIFUGENBEHÄLTER**
SEPARATOR WITH REMOVABLE CENTRIFUGE CONTAINER
SÉPARATEUR À CONTENANT DE CENTRIFUGEUSE AMOVIBLE

(30) Priorität: 02.11.2020 AT 509402020
(43) Veröffentlichungstag der Anmeldung: 03.05.2023
(73) Patentinhaber: Pregenzer, Bruno, 6414 Mieming (AT)
(72) Erfinder: Pregenzer, Bruno, 6414 Mieming (AT)
(74) Vertreter: Laufhütte, Dieter
(86) Internationale Anmeldenummer: PCT/EP2021/080295
(87) Internationale Veröffentlichungsnummer: WO 2022/090553

(56) Entgegenhaltungen:
- EP-A2- 0 642 771
- EP-A2- 0 642 771
- EP-B1- 0 224 232
- EP-B1- 0 224 232
- EP-B1- 0 290 745
- EP-B1- 0 290 745
- DE-A1- 4 102 695
- DE-A1- 4 102 695
- DE-U1- 9 422 058
- DE-U1- 9 422 058
- US-A- 5 693 221
- US-A- 5 693 221
- US-B2- 8 753 253
- US-B2- 8 753 253

## Beschreibung

Die vorliegende Erfindung betrifft einen Abscheider zur Trennung von Feststoffen aus einem Abwassergemisch, insbesondere einen Dentalabscheider zur Trennung von Feststoffen aus einem zahnärztlichen Abwassergemisch, nach dem Oberbegriff des Anspruchs 1.

Solche Abscheider kommen beispielsweise im zahnärztlichen Bereich zum Einsatz und dienen der Trennung des aus einer zahnärztlichen Absaugeinrichtung oder einer Speischale stammenden Flüssigkeits-Feststoff-Gemisches. Letzteres kann insbesondere Amalgampartikel enthalten, welche in der Umwelt aufgrund des enthaltenen Quecksilbers eine toxische Wirkung entfalten könnten und daher aus dem Abwassergemisch separiert und einer speziellen Entsorgung zugeführt werden müssen. Dabei wird beispielsweise ein Abscheider mit seiner zugehörigen Saugmaschine mehreren Zahnarztstühlen (beispielsweise 5 Zahnarztstühlen) zugeordnet werden.

Ein derartiger Dentalabscheider ist beispielsweise aus der WO 92/18062 bekannt. Hierbei erfolgt die Trennung der Feststoffpartikel aus der Flüssigkeit mittels einer Vollmantelzentrifuge, während die aus der Zentrifuge übertretende Flüssigkeit über einen Flüssigkeitsauslass abfließt. Nach jeder Zentrifugierphase fließen die Feststoffpartikel mit einem Restflüssigkeitsanteil über einen Feststoffablass in einen unterhalb der Zentrifuge angeordneten, abnehmbaren Sedimentationsbehälter. Der Sedimentationsbehälter wird bei Erreichen eines bestimmten Füllstandes abgenommen sowie typischerweise dicht verschlossen und zum Zwecke der Entsorgung bzw. des Recyclings verschickt.

Ein gattungsgemäßer Abscheider ist in der US 8 753 253 B2 offenbart, wobei der Luftablass oberhalb eines das Abwassergemisch verteilenden Laufrads angeordnet ist. Auch die EP 0 290 745 B1 offenbart einen gattungsgemäßen Abscheider.

Die EP 0 224 232 B1 und die DE 41 02 695 A1 beschreiben jeweils einen Abscheider mit einem Sedimentationsbehälter und einer Zentrifugentrommel, welche auf der Oberseite eines oberen Sperrflansches mehrere Pumpenflügel aufweist, die abgeschiedene Flüssigkeit in einen Auslassstutzen drücken.

Aus der DE 94 22 058 U1 ist ein Abscheider mit einer Zentrifugentrommel bekannt, welche eine Ventilanordnung zum Trennen von Luft und Flüssigkeit umfasst.

Die EP 0 642 771 A2 offenbart einen Abscheider mit einem in einer Zentrifugentrommel angeordneten Umlenkkörper, über welchen das eingeleitete Abwassergemisch in der Zentrifugentrommel verteilt wird. Oberhalb des Umlenkkörpers befindet sich ein Luftabführrohr, über welches Luft aus der Zentrifugentrommel abgesaugt wird. Die aus dem Abwassergemisch abgetrennten Feststoffe werden in einem separaten Sedimentationsbehälter gesammelt.

Ein weiterer Abscheider mit einem in einer Zentrifugentrommel angeordneten Laufrad und einem darüber angeordneten Ausleitteil zum Absaugen von Luft ist aus der US 5 693 221 A bekannt.

Die vorliegende Erfindung setzt sich nun zur Aufgabe, einem solchen Abscheider einen kompakteren Aufbau zu verleihen und die Anzahl der mit potenziell toxischen Stoffen in Kontakt kommenden Bauteile zu verringern.

Erfindungsgemäß wird diese Aufgabe durch eine Vorrichtung mit den Merkmalen des Anspruchs 1 gelöst. Vorteilhafte Ausführungsformen der Erfindung ergeben sich aus den Unteransprüchen und der nachfolgenden Beschreibung.

Demnach wird ein Abscheider zur Trennung von Feststoffen aus einem insbesondere zahnärztlichen Abwassergemisch, also insbesondere ein Dentalabscheider, vorgeschlagen, welcher ein Gehäuse mit einem Deckel und eine in einer Zentrifugenkammer des Gehäuses drehbar gelagerte und rotatorisch antreibbare Zentrifugentrommel umfasst. Das Gehäuse weist einen in die Zentrifugenkammer mündenden Gemischeinlass für das zu trennende Abwassergemisch und einen Flüssigkeitsauslass für aus dem Abwassergemisch abgetrennte Flüssigkeit auf. Zwischen der Oberseite der Zentrifugentrommel und dem Gehäuse ist dabei eine Übertrittsöffnung derart ausgebildet, dass während des Zentrifugiervorgangs Flüssigkeit von der Zentrifugentrommel in eine mit dem Flüssigkeitsauslass in Verbindung stehende Auslasskammer gelangen kann.

Erfindungsgemäß ist die Zentrifugentrommel derart ausgebildet, dass nach einem Zentrifugiervorgang unter Schwerkrafteinwirkung absinkende bzw. abscheidende Feststoffe in der Zentrifugentrommel verbleiben. Durch Öffnung des Deckels des Gehäuses ist die Zentrifugentrommel freilegbar, wobei die Zentrifugentrommel unter Verbleib der darin gesammelten Feststoffe aus dem Gehäuse ausbaubar bzw. herausnehmbar ist.

Die erfindungsgemäße Idee ist es also, die abgetrennten Feststoffpartikel nicht mehr in einem separaten Behälter, sondern direkt in der Zentrifugentrommel zu sammeln und den erfindungsgemäßen Abscheider so auszubilden, dass die volle Zentrifugentrommel aus dem Gehäuse ausgebaut und entnommen werden kann. Dadurch wird die Anzahl der Teile, die mit dem Abwassergemisch bzw. dessen Bestandteilen in Berührung kommen, auf ein Minimum reduziert. Die herausgenommene Zentrifugentrommel kann anschließend direkt der Weiterverarbeitung bzw. Entsorgung zugeführt werden, beispielsweise indem die Trommel mit einem Deckel verschlossen und verschickt wird.

Bei der Zentrifugentrommel handelt es sich vorzugsweise um einen als Vollmantelzentrifuge ausgebildeten Zentrifugenbehälter, welcher insbesondere über eine Motoreinheit in Drehung versetzt wird, sodass die im Abwassergemisch enthaltenen Feststoffe wie z.B. Amalgampartikel aufgrund der Zentrifugalkraft an die Innenwand gedrückt werden, während die Flüssigkeit über die Übertrittsöffnung in die Auslasskammer gelangen kann. Dadurch wird eine Feststoff-Flüssigkeits-Trennung erreicht. Bei der Zentrifugenkammer handelt es sich insbesondere um einen innerhalb des (geschlossenen) Gehäuses ausgebildeten Hohlraum, in welchem die Zentrifugentrommel drehbar gelagert ist.

Die oberhalb der Zentrifugentrommel ausgebildete Übertrittsöffnung kann als Teil der Zentrifugenkammer angesehen werden, erstreckt sich aber insbesondere radial über die vorzugsweise im Wesentlichen zylindrische Zentrifugenkammer nach außen und bildet eine Verbindung mit der Auslasskammer. Letztere kann eine im Wesentlichen ringförmige bzw. umlaufende Kammer darstellen, von der ein Anschluss für den Flüssigkeitsablass abgeht. Die Auslasskammer kann einen geneigten bzw. abgeschrägten Boden aufweisen, sodass die sich darin sammelnde Flüssigkeit selbstständig in den Flüssigkeitsauslass fließt. Letzterer kann tangential von der Auslasskammer abgehen. Die Auslasskammer ist insbesondere rotationsstarr, ebenso wie die Zentrifugenkammer und die Übertrittsöffnung.

Die Zentrifugentrommel kann konisch geformt sein, d.h. sich nach oben zur Übertrittsöffnung hin verbreitern, um einen Austritt der Flüssigkeit zu erleichtern. Alternativ oder zusätzlich kann die Zentrifugentrommel eine insbesondere im oberen Bereich der Zentrifugentrommel angeordnete Rückhaltevorrichtung bzw. Flüssigkeitsfang aufweisen, welche beispielsweise als umlaufender und nach unten weisender Steg ausgebildet sein kann. Dadurch wird verhindert, dass Feststoffe bei einer Drehung oben aus der Zentrifugentrommel treten können. Erst wenn die sich an der Innenwand der Zentrifugentrommel bildende Flüssigkeitsschicht eine gewisse Dicke bzw. Stärke erreicht, tritt Flüssigkeit über den Flüssigkeitsfang in die Übertrittsöffnung, während die Feststoffe in der Zentrifugentrommel verbleiben.

In einer Ausführungsform ist vorgesehen, dass an der Zentrifugentrommel im Bereich der Übertrittsöffnung eine Mehrzahl (d.h. mindestens zwei) von vorzugsweise auf Umfang verteilten Trennschaufeln bzw. Trennflügeln angeordnet sind, welche dazu ausgebildet sind, die während des Zentrifugiervorgangs oben aus der Zentrifugentrommel austretende Flüssigkeit nach außen in Richtung Auslasskammer zu schleudern. Die Trennschaufeln drehen sich also mit der Zentrifugentrommel mit und fungieren als eine Art Pumpe, die die abgetrennte Flüssigkeit, welche zwischen den Trennschaufeln hindurchfließt, nach außen schleudert. Insbesondere bei Verwendung eines Unterdrucks in der Zentrifugentrommel zum Absaugen von Luft dienen die Trennschaufeln der Überwindung dieses Unterdrucks, damit die Flüssigkeit in die Auslasskammer gelangen kann. Die Trennschaufeln sind insbesondere gleichmäßig auf Umfang verteilt.

In einer weiteren Ausführungsform ist vorgesehen, dass die Trennschaufeln an einem Flansch ausgebildet oder angebracht sind, welcher mit einem oberen Rand der Zentrifugentrommel fest oder lösbar verbunden ist, und vorzugsweise eine geschwungene Form aufweisen. Der Flansch ragt vorzugsweise am oberen Ende der Zentrifugentrommel radial nach außen und ist insbesondere zumindest teilweise in einem zwischen der Auslasskammer und der Zentrifugenkammer ausgebildeten Spalt angeordnet, welcher Teil der Übertrittsöffnung ist. Wenn der Flansch lösbar mit der Zentrifugentrommel verbunden ist, kann er insbesondere beim Ausbau der gefüllten Zentrifugentrommel abgenommen und an die neu einzubauende Zentrifugentrommel angebaut werden. Alternativ kann der Flansch auch fest mit der Zentrifugentrommel verbunden sein und zusammen mit dieser ausgebaut / verschickt werden.

In einer weiteren Ausführungsform ist vorgesehen, dass der Flansch einen in Umfangrichtung um laufenden Steg aufweist, welcher in einer zwischen der Auslasskammer und der Zentrifugenkammer ausgebildeten Nut verläuft, wobei vorzugsweise der Steg und die Nut eine Labyrinthdichtung bilden oder Teil einer solchen sind. Der Steg und die Nut sind insbesondere von oben gesehen kreisförmig und laufen um die vorzugsweise ebenfalls in Draufsicht kreisförmige Zentrifugenkammer um. Der Steg dreht sich mit der Zentrifugentrommel mit und gleitet in der Nut. Ein Teil der Außenwand der Zentrifugentrommel kann ebenfalls Teil der Labyrinthdichtung sein, ebenso wie ggf. weitere Dichtelemente oder Stege / Nuten. Durch die Labyrinthdichtung wird eine optimale Abdichtung am Rand des insbesondere tangentialen Flüssigkeitsablaufs bzw. des Flüssigkeitsaustritts an der Zentrifugentrommel erreicht.

In einer weiteren Ausführungsform ist ein insbesondere umlaufendes bzw. ring- oder bandförmiges Dichtelement vorgesehen, welches die Auslasskammer vom Gemischeinlass luftdicht trennt und mindestens ein Ventilelement zur Flüssigkeit-Luft-Trennung aufweist. Das mindestens eine Ventilelement ist vorzugsweise dazu ausgebildet, einen Durchtritt von Flüssigkeit zuzulassen und einen Durchtritt von Luft, insbesondere in Kombination mit einem Unterdruck, der in einem durch das Dichtelement abgedichteten Innenbereich bzw. -volumen herrscht, zu verhindern bzw. zu blockieren. Das Dichtelement ermöglicht eine effektive Flüssigkeit-Luft-Trennung.

In einer weiteren Ausführungsform ist vorgesehen, dass das Dichtelement im Bereich der Übertrittsöffnung angeordnet ist und die Auslasskammer von der Zentrifugenkammer luftdicht trennt, wobei das Ventilelement vorzugsweise dazu ausgebildet ist, einen Durchtritt von während des Zentrifugiervorgangs aus der Zentrifugentrommel tretender Flüssigkeit in die Auslasskammer zuzulassen. Dabei wird die Flüssigkeit insbesondere mittels der zuvor erwähnten und sich mit der Zentrifugentrommel mitdrehenden Trennschaufeln gegen das Dichtelement geschleudert. Insbesondere verhindert das Ventilelement einen Durchtritt von Luft in Kombination mit einem in der Zentrifugentrommel herrschenden Unterdruck. Das Dichtelement verläuft insbesondere ringförmig um die Zentrifugenkammer bzw. -trommel.

In dem durch das Dichtelement abgedichteten Innenvolumen, zu welchem hier der Innenraum der Zentrifugentrommel und vorzugsweise zumindest ein Teil der Übertrittsöffnung zählen, kann über eine Luftansaugvorrichtung, welche über einen Luftauslass mit der Zentrifugenkammer verbunden sein kann, ein Unterdruck erzeugt werden. Das Dichtelement ist so ausgestaltet, dass keine Luft von außen eindringen kann. Die Abscheidung von Feststoffen erfolgt hier innerhalb des Volumens, in dem der Unterdruck herrscht.

In einer alternativen Ausführungsform ist vorgesehen, dass das Dichtelement im Bereich eines innerhalb der Zentrifugentrommel drehbar gelagerten und insbesondere rotatorisch antreibbaren Gemischverteilers angeordnet ist und die Auslasskammer von dem Gemischverteiler luftdicht trennt. Vorzugsweise ist das Ventilelement dazu ausgebildet, einen Durchtritt von während des Zentrifugiervorgangs aus dem Gemischverteiler tretender Flüssigkeit zuzulassen. Der Gemischverteiler kann als Laufrad mit einer Vielzahl von Trennschaufeln ausgebildet sein, welche das aus dem Gemischeinlass in das Gehäuse eintretende Abwassergemisch nach außen und gegen das Dichtelement schleudern. In diesem Fall ist das Dichtelement also innerhalb der Zentrifugentrommel angeordnet und verläuft insbesondere ringförmig um den Gemischverteiler.

In dem durch das Dichtelement abgedichteten Innenvolumen, zu welchem in diesem alternativen Fall der Mündungsbereich des Gemischeinlasses und des Gemischverteilers zählen, kann über eine Luftansaugvorrichtung, welche über einen Luftauslass mit der Zentrifugenkammer verbunden sein kann, ein Unterdruck erzeugt werden. Das Dichtelement ist so ausgestaltet, dass keine Luft von außen eindringen kann. Die Abscheidung von Feststoffen erfolgt hier außerhalb des Volumens, in dem der Unterdruck herrscht.

In einer weiteren Ausführungsform ist vorgesehen, dass das Dichtelement zumindest abschnittsweise aus einem elastischen Material, insbesondere Gummi, gefertigt ist, wobei die Ventileinheiten durch Ventilklappen bzw. ventilklappenartige Öffnungen gebildet sind, die durch die durchtretende Flüssigkeit reversibel nach außen auslenkbar und vorzugsweise einstückig im elastischen Material ausgebildet sind. Im einfachsten Fall sind die Ventilklappen durch Einschnitte in das elastische Material gebildet. Sie werden durch die gegen das Dichtelement geschleuderte Flüssigkeit (entweder durch die Trennschaufeln am oberen Rand der Zentrifugentrommel oder durch den Gemischverteiler) nach außen gebogen und lassen Flüssigkeit durchtreten. Aufgrund der Rückstellkraft des elastischen Materials werden die Ventilklappen ohne den von innen ausgeübten Druck der Flüssigkeit selbstständig wieder geschlossen und gedichtet, insbesondere gegen einen im Inneren herrschenden Unterdruck, sodass eine luftdichte Abdichtung besteht. Es kann vorgesehen sein, dass das gesamte Dichtelement aus dem elastischen Material besteht und beispielsweise als Gummiring ausgebildet ist, oder dass nur einzelne Bereiche, beispielsweise die Ventilklappen, aus dem elastischen Material bestehen.

In einer weiteren Ausführungsform ist vorgesehen, dass das Dichtelement an einem im Bereich der Übertrittsöffnung angeordneten Trennsteg anliegt, welcher zwischen dem Dichtelement und der Zentrifugenkammer angeordnet ist und in welchem jeweils einer Ventilklappe zugeordnete Durchtrittsöffnungen ausgebildet sind. Der Trennsteg weist also ebenfalls eine Mehrzahl (d.h. mindestens zwei) Öffnungen bzw. Fenster auf. Der Trennsteg kann einstückig mit dem Gehäuse, insbesondere dem Gehäusedeckel, ausgebildet sein oder ein separates Bauteil darstellen, welches im / am Gehäuse gelagert bzw. montiert ist. Der Trennsteg kann gleichzeitig der Fixierung des Dichtelements dienen, beispielsweise indem er am Gehäusedeckel angeordnet ist und beim Schließen des Deckels einen Teil des Dichtelements, beispielsweise eine umlaufende Befestigungslippe, einklemmt. Vorzugsweise sind die Durchtrittsöffnungen kleiner sind als die Ventilklappen, damit letztere nicht nach innen öffnen und dadurch Luft von außen einströmen lassen können. Dadurch werden die Ventilklappen bei einem innen herrschenden Unterdruck und Abwesenheit von nach außen drückender Flüssigkeit von außen gegen den Trennsteg gedrückt und dichten den Innenraum luftdicht gegen die Auslasskammer ab.

Alternativ kann vorgesehen sein, dass das Dichtelement außen an einem den Gemischverteiler umschließenden Verteilergehäuse anliegt, welches, wie zuvor beschrieben, entsprechende Durchtrittsöffnungen aufweist.

Erfindungsgemäß weist das Gehäuse einen in die Zentrifugenkammer mündenden Luftablass auf, durch welchen Luft aus der Zentrifugentrommel und/oder der Übertrittsöffnung absaugbar ist, beispielsweise mittels einer an den Luftablass angeschlossenen Luftansaugvorrichtung, und welcher vorzugsweise zentral oberhalb der Zentrifugentrommel und/oder im Bereich des Gemischeinlasses angeordnet ist. Somit ist eine Separation von Feststoffen, Flüssigkeit und Luft eines Drei-Phasen-Abwassergemisches möglich.

Erfindungsgemäß ist vorgesehen, dass innerhalb der Zentrifugentrommel ein Gemischverteiler drehbar gelagert und rotatorisch antreibbar ist, wobei der Gemischverteiler ausgebildet ist, das aus dem Gemischeinlass tretende Abwassergemisch in der Zentrifugentrommel zu verteilen und/oder gegen deren Innenwandung zu schleudern und wobei der Gemischverteiler vorzugsweise gemeinsam mit der Zentrifugentrommel rotatorisch antreibbar ist. Zum Ausbau der Zentrifugentrommel kann der Gemischverteiler ebenfalls ausbaubar sein. Der Gemischverteiler kann aus einem Kunststoff bestehen.

In einer weiteren Ausführungsform ist vorgesehen, dass der Gemischverteiler als Laufrad mit einer Mehrzahl von insbesondere geschwungenen Trennschaufeln bzw. Trennflügeln ausgebildet ist, welches vorzugsweise von der Seite gesehen eine konische Form aufweist, die sich insbesondere nach unten Richtung Boden der Zentrifugentrommel verbreitert. In Draufsicht weist das Laufrad vorzugsweise eine runde Form auf.

Erfindungsgemäß ist vorgesehen, dass der Gemischverteiler mindestens einen durchgängigen Luftkanal umfasst und derart im Bereich der Mündung des Luftablasses angeordnet ist, dass die aus der Zentrifugentrommel angesaugte Luft durch den mindestens einen Luftkanal in den Luftablass strömt, wobei der mindestens eine Luftkanal vorzugsweise im Wesentlichen parallel zur Drehachse des Gemischverteilers verläuft. Es können eine Vielzahl von Luftkanälen vorgesehen sein, die beispielsweise zumindest teilweise zwischen einer Mehrzahl von Trennschaufeln verlaufen. Die Trennschaufeln können also einerseits dem Verteilen des Abwassergemisches und andererseits dem Ansaugen von Luft dienen. Alternativ oder zusätzlich können eigens für den Luftabzug vorgesehene Luftkanäle ausgebildet sein. Der Gemischverteiler kann unmittelbar am / im Luftablass angeordnet sein.

In einer weiteren Ausführungsform ist vorgesehen, dass der Gemischverteiler zumindest teilweise von einem rotationsstarr mit dem Gehäuse verbundenen Verteilergehäuse umgeben ist, welches mit dem Luftablass und/oder dem Gemischeinlass verbunden ist. Das Verteilergehäuse schließt sich vorzugsweise unmittelbar an den Luftablass und/oder den Gemischeinlass an und weist vorzugsweise eine konische Form auf, die insbesondere der Außenkontur des Gemischverteilers folgt. Der Luftabzug kann zentral und der Gemischeinlass um den Luftablass herum angeordnet sein. Dadurch wird das Abwassergemisch an den äußeren Bereich des Gemischverteilers geleitet, an dem sich insbesondere mehrere Trennschaufeln befinden, während die Luft aus dem Innenraum der Zentrifugentrommel über den inneren / mittigen Bereich des Gemischverteilers angesaugt wird. Das Verteilergehäuse ist vorzugsweise zum Boden der Zentrifugentrommel hin offen, kann aber auch anderweitig ausgebildet sein und z.B. seitliche Öffnungen aufweisen.

In einer weiteren Ausführungsform ist vorgesehen, dass die Zentrifugentrommel und der Gemischverteiler über eine gemeinsame, drehbar im Gehäuse gelagerte Welle rotatorisch antreibbar sind, welche vorzugsweise durch eine im Boden der Zentrifugentrommel ausgebildete Aussparung hindurchgeführt ist. Die Welle ist vorzugsweise durch einen Motor antreibbar. Ferner ist die Welle vorzugsweise durch eine Aussparung im Gehäuse geführt und insbesondere gegenüber diesem abgedichtet. Der Gemischverteiler kann durch eine lösbare Verbindung, beispielsweise über mindestens eine Schraube, mit der Welle verbunden und von dieser für den Ausbau der Zentrifugentrommel trennbar bzw. abnehmbar sein.

In einer weiteren Ausführungsform ist vorgesehen, dass ein Trommeldeckel vorgesehen ist, mittels welchem die aus dem Gehäuse ausgebaute Zentrifugentrommel verschließbar, insbesondere gas- und/oder flüssigkeitsdicht verschließbar ist. Nach dem Ausbau der mit abgeschiedenen Feststoffen gefüllten Zentrifugentrommel aus dem Gehäuse wird der vorgehaltene Trommeldeckel auf die Zentrifugentrommel aufgesetzt und beispielsweise festgeschraubt (hierbei sind selbstverständlich auch andere Befestigungsarten denkbar), sodass die Feststoffe sicher in der Zentrifugentrommel gelagert sind und die abgeschlossene und abgedichtete Zentrifugentrommel zum Zwecke einer Entsorgung verschickt bzw. transportiert werden kann.

In einer weiteren Ausführungsform ist vorgesehen, dass der Gemischeinlass, die Auslasskammer, die Zentrifugenkammer, die Zentrifugentrommel, der Gehäusedeckel und/oder der Gemischverteiler koaxial zueinander angeordnet sind. Für die Auslasskammer bedeutet dies beispielsweise, dass sie ringförmig um die Zentrifugenkammer umlaufen kann, wobei die geometrische Mitte der kreisförmigen Kammer auf der Drehachse der Zentrifugentrommel liegt. Dadurch ergibt sich ein kompakter Aufbau des erfindungsgemäßen Abscheiders.

Weitere Merkmale, Einzelheiten und Vorteile der Erfindung ergeben sich aus dem nachfolgend anhand der Figuren erläuterten Ausführungsbeispiel. Es zeigen:
- Figur 1:: eine seitliche Schnittansicht des erfindungsgemäßen Abscheiders gemäß einem bevorzugten Ausführungsbeispiel;
- Figur 2:: den Abscheider gemäß Figur 1 in einer perspektivischen Ansicht;
- Figur 3:: Ober- und Unterteil des Abscheiders gemäß Figur 2 in einer perspektivischen Ansicht;
- Figur 4:: eine seitliche Schnittansicht des Unterteils;
- Figur 5:: eine perspektivische Explosionsdarstellung des Unterteils; und
- Figur 6:: eine perspektivische Explosionsdarstellung des Oberteils.

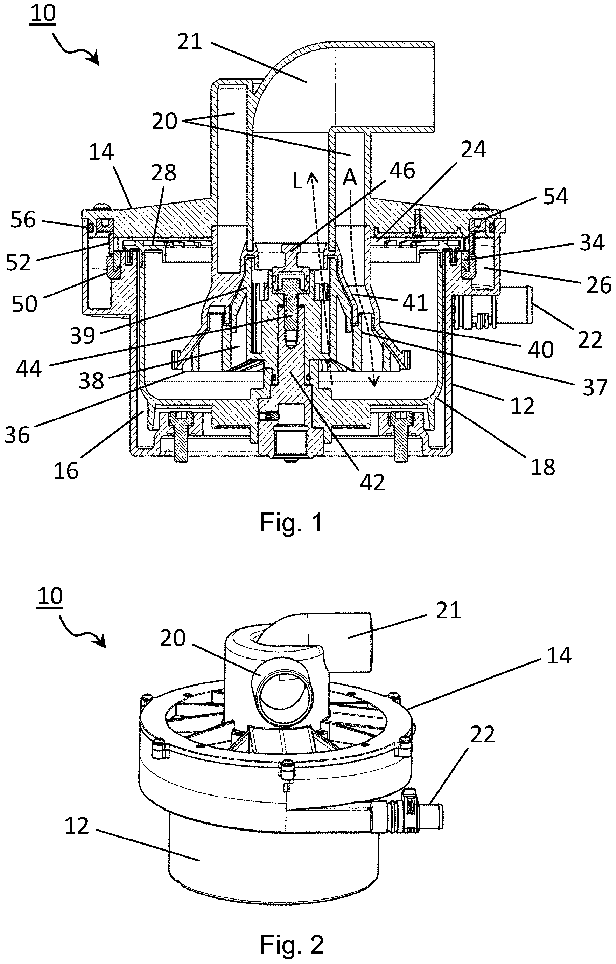

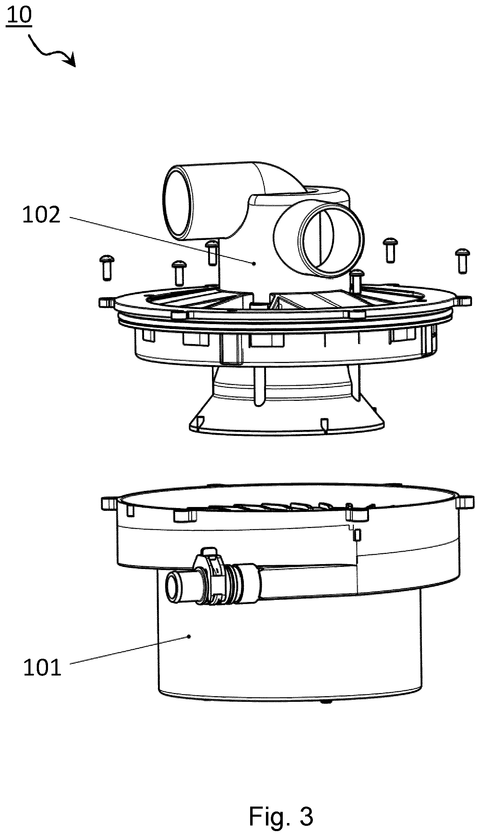

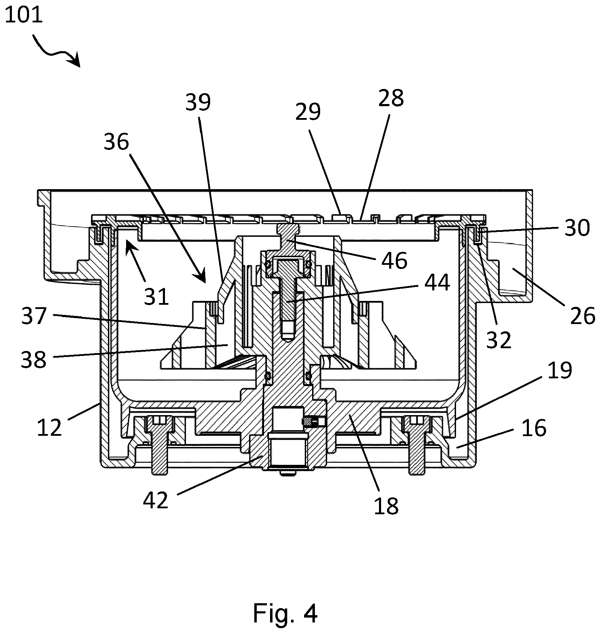

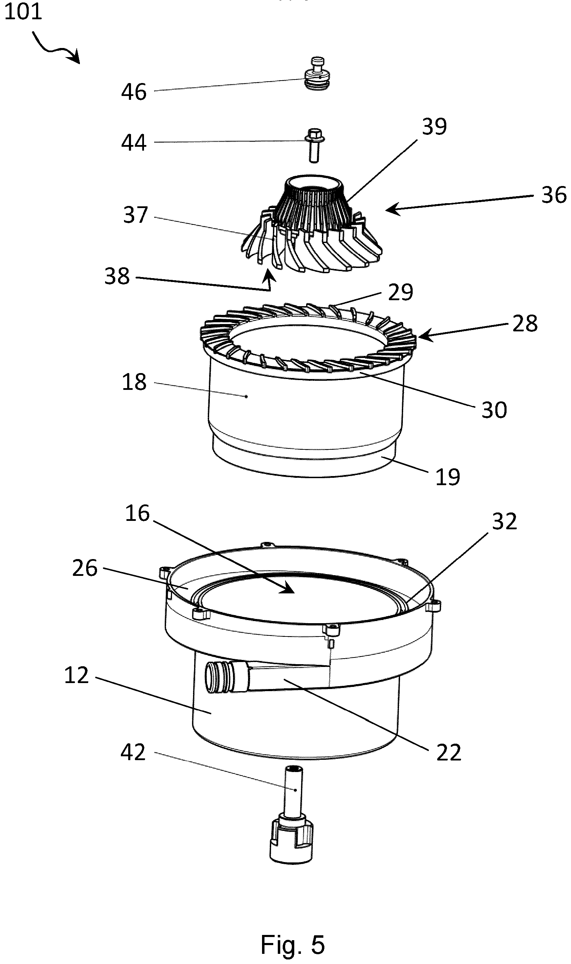

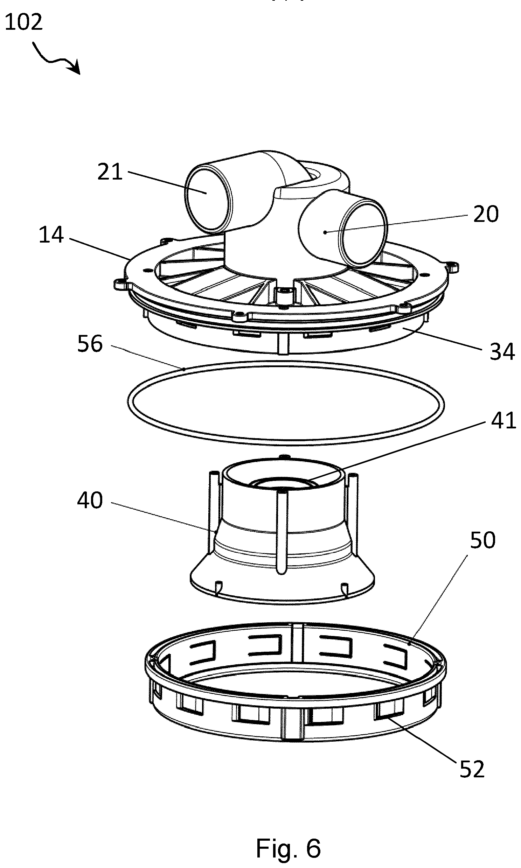

Die Figur 1 zeigt einen zentralen Schnitt durch ein Ausführungsbeispiel des erfindungsgemäßen Abscheiders 10 in einer seitlichen Ansicht. Eine perspektivische Ansicht des gesamten Abscheiders 10 von außen ist in der Figur 2 gegeben. Wie in der Figur 3 gezeigt ist, ist der Abscheider 10 in zwei Baugruppen teilbar: ein Unterteil 101 und ein Oberteil 102. Die Figuren 4 und 5 zeigen eine seitliche Schnittansicht und eine Explosionsansicht durch das Unterteil 101, während eine Explosionsansicht des Oberteils 102 in der Figur 6 dargestellt ist.

Die hierin verwendeten Begriffe "oben" und "unten" beziehen sich auf den Fall, dass der Abscheider 10 auf einer ebenen Fläche abgestellt ist oder sich in einer ebenen Einbaulage befindet und daher so ausgerichtet ist, wie es in der Figur 1 gezeigt ist.

Der erfindungsgemäße Abscheider 10 weist ein Gehäuse 12 auf, innerhalb welchem eine im Wesentlichen zylindrische Zentrifugenkammer 16 ausgebildet ist. In der Zentrifugenkammer 16 befindet sich eine als nach oben offene Vollmantelzentrifuge ausgebildete Zentrifugentrommel 18 (auch als Zentrifugenbehälter bezeichnet). Die Zentrifugentrommel 18 ist mit einer im Gehäuse 12 drehbar gelagerten und über eine hier nicht näher dargestellte Motoreinheit rotatorisch antreibbaren Welle 42 drehfest verbunden, wobei die Welle 42 von unten durch das Gehäuse 12 hindurchgeführt ist. Der obere Teil des Gehäuses 12 bildet einen mit einem Gehäuseunterteil über mehrere Schrauben verbundenen und somit abnehmbaren Deckel 14. Die Abdichtung zwischen Gehäuseunterteil und Deckel 14 erfolgt über ein als O-Ring ausgebildetes Dichtungselement 56 (vgl. Figuren 1 und 6).

Innerhalb der Zentrifugentrommel 18 befindet sich ein Gemischverteiler 36, welcher aus Laufrad mit einer Vielzahl von geschwungenen Trennschaufeln 37 ausgebildet und drehfest mit der Welle 42 verbunden ist. Somit drehen sich die Zentrifugentrommel 18 und das Laufrad 36 gemeinsam mit der Welle 42. Oberhalb des Laufrads 36 befindet sich ein Gemischeinlass 20, über welchen das zu trennende Abwassergemisch, bei dem es sich insbesondere um ein zahnärztliches Abwassergemisch handelt, zentral von oben in die Zentrifugentrommel 18 eingebracht wird. Der Gemischeinlass 20 mündet in ein rotationsstarr am Deckel 14 befestigtes Verteilergehäuse 40, welches zum Boden der Zentrifugentrommel 18 hin offen ist und das drehbare Laufrad 36 umgibt. Sowohl das Laufrad 36, als auch das Verteilergehäuse 40 weisen von der Seite gesehen eine sich nach unten verbreiternde und im Wesentlichen konische Form auf, wobei die Innenkontur des Verteilergehäuses 40 der Außenkontur des Laufrads 36 folgt.

Wie in der Explosionsdarstellung der Figur 5 gut zu erkennen ist, weist das Laufrad eine Vielzahl von auf Umfang gleichmäßig verteilten, radial von der Drehachse abgehenden und seitlich geschwungenen Trennschaufeln bzw. Trennflügeln 37 auf. Oberhalb der Trennschaufeln 37 befindet sich ein konischer Bereich 39, welcher innerhalb einer entsprechend geformten Innenwandung 41 des Verteilergehäuses 40 verläuft. Die Innenwandung 41 reicht dabei nicht bis an das untere Ende des Verteilergehäuses 40 und bildet mit der Außenwandung des Verteilergehäuses 40 einen umlaufenden Spalt, welcher mit dem Gemischeinlass 20 verbunden ist. Das einfließende Abwassergemisch fließt während des Zentrifugiervorgangs (also wenn sich Laufrad 36 und Zentrifugentrommel 18 drehen) von oben aus dem Gemischeinlass 20 in den Spalt zwischen Innenwandung 41 und Außenwandung des Verteilergehäuses 40 und anschließend durch die zwischen den Trennschaufeln 37 ausgebildeten Zwischenräume (vgl. den gestrichelten Pfeil A in der Figur 1). Da sich das Laufrad 36 schnell dreht, wird das Abwassergemisch verteilt und nach unten / außen gegen die Innenwand der Zentrifugentrommel 18 geschleudert.

Oberhalb des Laufrads 36 befindet sich ferner ein Luftablass 21, welcher vom Gemischeinlasses 20 umgeben ist und ebenfalls in das Verteilergehäuse 40 mündet. Mittels einer hier nicht dargestellten Luftansaugvorrichtung kann über den Luftablass 21 Luft aus dem Inneren des Gehäuses 12, d.h. aus der Zentrifugenkammer 16 bzw. dem Innenraum der Zentrifugentrommel 18, abgesaugt und so vom Abwassergemisch getrennt werden. Der Luftablass 21 ist mit der Innenwandung 41 verbunden, sodass die Luft über innerhalb der Innenwandung 41 verlaufende Luftkanäle 38 abgesaugt wird (vgl. den gestrichelten Pfeil L in der Figur 1). Diese Luftkanäle 38 sind durch Zwischenräume von Trennschaufeln 37 gebildet, die sich unterhalb des konischen Bereichs 39 von innen nach außen erstrecken. Durch die Drehung des Laufrads 36 und die Trennung des Bereichs des inneren Luftabzugs L vom Bereich des äußeren Abwassergemischflusses A mittels der Innenwandung 41 des Verteilergehäuses 40 wird verhindert, dass Flüssigkeit in den Luftablass 21 gesaugt wird. Wie in der Figur 2 zu erkennen ist, weisen der Gemischeinlass 20 und der Luftablass 21 seitliche Anschlüsse auf, an die z.B. Schläuche angeschlossen werden können.

Während des Zentrifugiervorgangs wird das über das Laufrad 36 in der Zentrifugentrommel 18 verteilte Abwassergemisch aufgrund der Zentrifugalkraft gegen die Innenwand der Zentrifugentrommel 18 gedrückt. Dabei verbleiben die festen Bestandteile bzw. Feststoffpartikel des Abwassergemisches an der Innenwand, während die Flüssigkeit oben aus der Zentrifugentrommel 18 austritt und über eine Übertrittsöffnung 24 in eine um die Zentrifugenkammer 16 umlaufende Auslasskammer 26 gelangt. Die Auslasskammer 26 ist mit einem tangentialen Flüssigkeitsauslass 22 verbunden (vgl. Figur 2), wobei die sich in der Auslasskammer 26 sammelnde Flüssigkeit aufgrund einer Abschrägung des Bodens in den Flüssigkeitsauslass 22 fließt. An diesen kann ein geeigneter Schlauch angeschlossen werden. Nach jedem Zentrifugiervorgang fallen die Feststoffpartikel aufgrund der Schwerkraft (und der nun nicht mehr wirkenden Zentrifugalkraft) nach unten und sammeln sich am Boden der Zentrifugentrommel 18. Insgesamt erfolgt also eine Drei-Phasen-Trennung des von oben zentral einlaufenden Abwassergemisches mittels der Zentrifuge.

Wie insbesondere in den Figuren 4 und 5 gut erkennbar ist, befindet sich an der Oberseite der Zentrifugentrommel 18 ein Flansch 28, der an dessen Oberseite eine Vielzahl von auf Umfang gleichmäßig verteilten und geschwungenen bzw. zur Seite gebogenen Trennschaufeln bzw. Trennflügeln 29 aufweist. Der Flansch 28 ragt dabei radial nach innen und schließt mit einem nach unten weisenden, umlaufenden Steg ab, welcher einen Flüssigkeitsfang 31 bildet. Der Flüssigkeitsfang 31 sorgt dafür, dass die gegen die Innenwand der Zentrifugentrommel 18 gedrückten Feststoffpartikel nicht (mit einer geringen Menge Flüssigkeit) oben aus der Zentrifugentrommel 18 treten. Erst wenn sich ein ausreichend starker Flüssigkeitsfilm an der Innenwand der Zentrifugentrommel 18 gebildet hat, welcher über die Breite des Flüssigkeitsfangs 31 hinausgeht, tritt Flüssigkeit oben aus der Zentrifugentrommel 18. Die ganz außen befindlichen Feststoffpartikel verbleiben dadurch stets in der Zentrifugentrommel 18.

Der Flansch 28 ragt von der Oberseite der Zentrifugentrommel 18 ebenfalls radial nach außen und weist dort einen nach unten weisenden, umlaufenden Steg 30 auf, der innerhalb einer nach oben offenen, ebenfalls umlaufenden Nut 32 des Gehäuses 12 verläuft (vgl. Figur 4). Die Wand der Zentrifugentrommel 18, der Steg 30 und die Nut 32 bilden eine Labyrinthdichtung, welche die Zentrifugentrommel 18 gegen das Gehäuse 12 bzw. die Auslasskammer 26 abdichtet. Hier können weitere Dichtelemente vorgesehen sein, um die Dichtwirkung weiter zu erhöhen.

Zwischen der Oberseite des Flansches 28 und dem Gehäusedeckel 14 verbleibt ein geringer Spalt, welcher Teil einer Übertrittsöffnung 24 ist, die sich als um die Zentrifugenkammer umlaufender Spalt bis zur Auslasskammer 26 fortsetzt. In diesem Spalt 24 bewegen sich die Trennschaufeln 29 des Flansches 28. Durch die Drehung des Flansches 28 zusammen mit der Zentrifugentrommel 18, wird die oben aus der Zentrifugentrommel 18 austretende Flüssigkeit zwischen die Trennschaufeln 29 gedrängt und durch diese nach außen in Richtung Auslasskammer 26 geschleudert.

Zwischen der Zentrifugenkammer 16 und der Auslasskammer 26 befindet sich ein band- bzw. ringförmig umlaufendes Dichtelement 50, welches am auslasskammerseitigen Ende der Übertrittsöffnung 24 angeordnet ist. Das Dichtelement 50, welches in der Figur 6 gut zu erkennen ist, besteht in diesem Ausführungsbeispiel aus Gummi und weist eine Vielzahl von gleichmäßig auf Umfang verteilten, rechteckigen Ventilklappen 52 auf, die durch (eckige) U-förmige Einschnitte in das Gummi gebildet sind. Der obere Rand des Dichtelements 50 sitzt in einer nach unten offenen, umlaufenden Nut 54 im Gehäusedeckel 14, während der untere Rand eine in Richtung Zentrifugentrommel 18 gebogene, hakenförmige Befestigungslippe aufweist.

Ein mit dem Gehäusedeckel 14 verbundener, umlaufender Trennsteg 34 ist zwischen dem Dichtelement 50 und dem Flansch 28 angeordnet und liegt an der Innenseite des Dichtelements 50 an. Der Trennsteg 34 greift in die Befestigungslippe des Dichtelements 50 ein und klemmt dieses im Gehäuse 12 ein. Das Dichtelement 50 wird also über den Trennsteg 34 im Gehäuse 12 fixiert. Ferner weist der Trennsteg 34 eine Vielzahl von gleichmäßig auf Umfang verteilten Öffnungen bzw. Fenstern auf, wobei je ein Fenster einer Ventilklappe 52 zugeordnet ist. Die Fenster sind insbesondere rechteckig und kleiner als die ventilklappenartigen Öffnungen bzw. Ventilklappen 52 ausgebildet und ausschnittsweise in der Figur 6 zu erkennen.

Dadurch, dass über den Luftablass 21 die Luft aus dem Inneren des Gehäuses 12 abgesaugt wird, herrscht in dem innerhalb des Dichtelements 50 befindlichen Innenvolumen ein Unterdruck. Durch diesen Unterdruck werden die Ventilklappen 52 von außen gegen den Trennsteg 34 gepresst, sodass die darin ausgebildeten Durchlassöffnungen bzw. Fenster luftdicht abgeschlossen sind. Die aus dem Abwassergemisch abgetrennte Flüssigkeit wird beim Zentrifugiervorgang durch die Trennschaufeln 29 des Flansches 28 von innen gegen die Ventilklappen 52 geschleudert. Die Trennschaufeln 29 fungieren somit als eine Art Hilfspumpe, damit die abgetrennte Flüssigkeit den Unterdruck überwinden und in die Auslasskammer 26 gelangen kann.

Aufgrund ihrer Elastizität biegen sich durch den Druck der Flüssigkeit die Ventilklappen 52 nach außen in Richtung Auslasskammer 26 und ermöglichen einen Durchtritt der Flüssigkeit von der Übertrittsöffnung 24 in die Auslasskammer 26. Dabei kann jedoch keine Luft nach außen entweichen oder von außen nach innen gelangen, da aufgrund der Rückstellkraft des Gummis die Ventilklappen 52 sofort wieder gegen den Unterdruck geschlossen werden, sobald keine Flüssigkeit mehr von innen dagegen drückt. Beim Durchtritt der Flüssigkeit dichtet diese selbst die geöffneten Ventilklappen 52 luftdicht ab. Das Dichtelement 50 ermöglicht somit eine einfache, effektive und kostengünstige Flüssigkeit-Luft-Trennung.

Der Gehäusedeckel 14 kann vom Unterteil des Gehäuses 12 abgenommen werden, wodurch die Zentrifugentrommel 18 und das darin gelagerte Laufrad 36 freigelegt werden. Wie in der Figur 3 zu sehen ist, sind der Trennsteg 34, das Dichtelement 50 und das Ventilgehäuse 40 am Deckel 14 befestigt. Bevor die Zentrifugentrommel 18 herausmontiert werden kann, muss das Laufrad 36 ausgebaut werden, welches mittels einer Schraube 44 an der Welle 42 befestigt ist (vgl. Figuren 3 und 4). Die Schraube 44 ist mittels einer Abdeckkappe 46 abgedeckt und ermöglicht ein einfaches und schnelles Entfernen des Laufrads 36 aus der Zentrifugentrommel 18. Anschließend kann die Zentrifugentrommel 18 aus dem Gehäuse 12 herausgenommen und mittels eines hier nicht dargestellten Trommeldeckels verschlossen werden. Ferner wird der Flansch 28 von der Zentrifugentrommel 18 abgenommen und kann beispielsweise auf eine neu einzusetzende Zentrifugentrommel 18 aufgesetzt werden. Allerdings ist auch eine Ausführungsform vorstellbar, bei der der Flansch 28 fest mit der Zentrifugentrommel 18 verbunden ist und zusammen mit dieser verschickt wird. Um die herausgenommene Zentrifugentrommel 18 stabil abstellen zu können, weist sie an der Unterseite einen als umlaufender Steg ausgebildeten Stützfuß 19 auf.

Beim erfindungsgemäßen Abscheider 10 werden die vom Abwassergemisch abgetrennten Feststoffe somit nicht in einem eigenen Sammel- bzw. Sedimentationsbehälter gesammelt, sondern sammeln sich nach dem Abscheiden innerhalb der Zentrifugentrommel 18. Bei Erreichen eines bestimmten Füllgrads (welcher beispielsweise mittels einer Sensorvorrichtung ermittelt werden kann) wird die Zentrifugentrommel 18 wie vorstehend beschrieben aus dem Gehäuse 12 ausgebaut und verschlossen, sodass sie einer Weiterverarbeitung oder Entsorgung zugeführt werden kann. Im Unterschied zu üblichen Systemen dient beim erfindungsgemäßen Abscheider 10 der Korpus der Trennvorrichtung also selbst zum Sammeln und Entsorgen der abgetrennten Feststoffpartikel. Mit dem hier gezeigten Drei-Phasen-Trennsystem können zudem hohe Volumenströme verarbeitet werden, beispielsweise Volumenströme von bis zu 20 l/min. Durch eine entsprechend große Dimensionierung des Geräts lassen sich hohe Trenngrade erreichen.

In einer alternativen Ausführungsform ist das Dichtelement 50 nicht zwischen der Auslasskammer 26 und der Zentrifugentrommel 18 angeordnet wie vorstehend beschrieben, sondern liegt außen am Verteilergehäuse 40 (oder an einem mit dem Verteilergehäuse 40 verbundenen Bauteil) an. In diesem Fall herrscht der durch die Luftabsaugvorrichtung erzeugte Unterdruck nur innerhalb des Verteilergehäuses 40, welches im Gegensatz zum zuvor beschriebenen Ausführungsbeispiel nach unten geschlossen ist. Die Trennung der festen Bestandteile des Abwassergemisches von der flüssigen Phase erfolgt außerhalb des durch das Dichtelement 50 luftdicht abgeschlossenen Volumens, also außerhalb des Bereichs des Unterdrucks. Die Auslenkung der Ventilklappen 52, die einen Durchtritt des Abwassergemisches (also der Flüssigkeit-Feststoff-Phase) ermöglichen, erfolgt in diesem Ausführungsbeispiel durch das innerhalb des Dichtelements 50 rotierenden Laufrads 36, welches das Abwassergemisch gegen die Ventilklappen 52 schleudert. Wie oben beschrieben verhindert die Rückstellkraft der Ventilklappen 52, dass Luft von außerhalb des Dichtelements 50 in den Innenbereich des Verteilergehäuses 40 bzw. in den Luftablass 21 gelangt.

In diesem alternativen Ausführungsbeispiel werden nicht zwingend mit der Zentrifugentrommel 18 mitlaufende Trennschaufeln 29 benötigt, die die Flüssigkeit in Richtung Auslasskammer 26 schleudern. Somit kann vorgesehen sein, dass die von den Feststoffpartikeln getrennte Flüssigkeit direkt oben aus der Zentrifugentrommel 18 austritt und über die Übertrittsöffnung 24 in die Auslasskammer 26 gelangt.

### Bezugszeichenliste:

- 10: Abscheider
- 12: Gehäuse
- 14: Deckel
- 16: Zentrifugenkammer
- 18: Zentrifugentrommel
- 19: Stützfuß
- 20: Gemischeinlass
- 21: Luftablass
- 22: Flüssigkeitsauslass
- 24: Übertrittsöffnung
- 26: Auslasskammer
- 28: Flansch
- 29: Trennschaufel
- 30: Steg
- 31: Flüssigkeitsfang
- 32: Nut
- 34: Trennsteg
- 36: Gemischverteiler (Laufrad)
- 37: Trennschaufel
- 38: Luftkanal
- 39: Konischer Bereich
- 40: Verteilergehäuse
- 41: Innenwandung
- 42: Welle
- 44: Schraube
- 46: Abdeckkappe
- 50: Dichtelement
- 52: Ventileinheit (Ventilklappe)
- 54: Nut
- 56: Dichtungselement
- 101: Unterteil
- 102: Oberteil
- A: Flussrichtung Abwassergemisch
- F: Strömungsrichtung Luft

## Patentansprüche

1. Abscheider (10) zur Trennung von Feststoffen aus einem insbesondere zahnärztlichen Abwassergemisch, umfassend ein Gehäuse (12) mit einem Deckel (14) und eine in einer Zentrifugenkammer (16) des Gehäuses (12) drehbar gelagerte und rotatorisch antreibbare Zentrifugentrommel (18), wobei:
- das Gehäuse (12) einen in die Zentrifugenkammer (16) mündenden Gemischeinlass (20) für das zu trennende Abwassergemisch und einen Flüssigkeitsauslass (22) für aus dem Abwassergemisch abgetrennte Flüssigkeit aufweist,
- zwischen der Oberseite der Zentrifugentrommel (18) und dem Gehäuse (12) eine Übertrittsöffnung (24) derart ausgebildet ist, dass während des Zentrifugiervorgangs Flüssigkeit von der Zentrifugentrommel (18) in eine mit dem Flüssigkeitsauslass (22) in Verbindung stehende Auslasskammer (26) gelangen kann,
- das Gehäuse (12) einen in die Zentrifugenkammer (16) mündenden Luftablass (21) aufweist, durch welchen Luft aus dem Bereich des Gemischeinlasses (20), der Zentrifugentrommel (18) und/oder der Übertrittsöffnung (24) absaugbar ist,
- innerhalb der Zentrifugentrommel (18) ein Gemischverteiler (36) drehbar gelagert und rotatorisch antreibbar ist, und
- der Gemischverteiler (36) ausgebildet ist, das aus dem Gemischeinlass (20) tretende Abwassergemisch in der Zentrifugentrommel (18) zu verteilen und/oder gegen deren Innenwandung zu schleudern,
**dadurch gekennzeichnet,**
- **dass** der Gemischverteiler (36) mindestens einen durchgängigen Luftkanal (38) umfasst und derart im Bereich der Mündung des Luftablasses (21) angeordnet ist, dass die aus der Zentrifugentrommel (18) angesaugte Luft durch den mindestens einen Luftkanal (38) in den Luftablass (21) strömt, und
- **dass** die Zentrifugentrommel (18) derart ausgebildet ist, dass nach einem Zentrifugiervorgang unter Schwerkrafteinwirkung absinkende Feststoffe in der Zentrifugentrommel (18) verbleiben, wobei die Zentrifugentrommel (18) durch Öffnung des Deckels (14) freilegbar und unter Verbleib der darin gesammelten Feststoffe aus dem Gehäuse (12) ausbaubar ist.

2. Abscheider (10) nach Anspruch 1, **dadurch gekennzeichnet, dass** an der Zentrifugentrommel (18) im Bereich der Übertrittsöffnung (24) eine Mehrzahl von vorzugsweise auf Umfang verteilten Trennschaufeln (29) angeordnet sind, welche dazu ausgebildet sind, die während des Zentrifugiervorgangs oben aus der Zentrifugentrommel (18) austretende Flüssigkeit nach außen in Richtung Auslasskammer (26) zu schleudern.

3. Abscheider (10) nach Anspruch 2, **dadurch gekennzeichnet, dass** die Trennschaufeln (29) an einem Flansch (28) ausgebildet oder angebracht sind, welcher mit einem oberen Rand der Zentrifugentrommel (18) fest oder lösbar verbunden ist, und vorzugsweise eine geschwungene Form aufweisen.

4. Abscheider (10) nach Anspruch 3, **dadurch gekennzeichnet, dass** der Flansch (28) einen in Umfangrichtung umlaufenden Steg (30) aufweist, welcher in einer zwischen der Auslasskammer (26) und der Zentrifugenkammer (16) ausgebildeten Nut (32) verläuft, wobei vorzugsweise der Steg (30) und die Nut (32) eine Labyrinthdichtung bilden oder Teil einer solchen sind.

5. Abscheider (10) nach einem der vorhergehenden Ansprüche, **dadurch gekennzeichnet, dass** ein insbesondere umlaufendes Dichtelement (50) vorgesehen ist, welches die Auslasskammer (26) vom Gemischeinlass (20) luftdicht trennt und mindestens ein Ventilelement (52) zur Flüssigkeit-Luft-Trennung aufweist, wobei das Ventilelement (52) vorzugsweise dazu ausgebildet ist, einen Durchtritt von Flüssigkeit zuzulassen und einen Durchtritt von Luft, insbesondere in Kombination mit einem in einem durch das Dichtelement (50) abgedichteten Innenbereich herrschenden Unterdruck, zu verhindern.

6. Abscheider (10) nach Anspruch 5, **dadurch gekennzeichnet, dass** das Dichtelement (50) im Bereich der Übertrittsöffnung (24) angeordnet ist und die Auslasskammer (26) von der Zentrifugenkammer (16) luftdicht trennt oder dass das Dichtelement (50) im Bereich eines innerhalb der Zentrifugentrommel (18) drehbar gelagerten Gemischverteilers (36) angeordnet ist und die Auslasskammer (26) von dem Gemischverteiler (36) luftdicht trennt, wobei das Ventilelement (52) vorzugsweise dazu ausgebildet ist, einen Durchtritt von während des Zentrifugiervorgangs aus der Zentrifugentrommel (18) oder aus dem Gemischverteiler (36) tretender Flüssigkeit zuzulassen.

7. Abscheider (10) nach Anspruch 5 oder 6, **dadurch gekennzeichnet, dass** das Dichtelement (50) zumindest abschnittsweise aus einem elastischen Material, insbesondere Gummi, gefertigt ist, wobei die Ventilelemente (52) durch Ventilklappen gebildet sind, die durch die durchtretende Flüssigkeit reversibel nach außen auslenkbar und vorzugsweise einstückig im elastischen Material ausgebildet sind.

8. Abscheider (10) nach Anspruch 7, **dadurch gekennzeichnet, dass** das Dichtelement an einem im Bereich der Übertrittsöffnung (24) zwischen dem Dichtelement (50) und der Zentrifugenkammer (16) angeordneten Trennsteg (34) oder an einem den Gemischverteiler (36) umgebenden Verteilergehäuse (40) anliegt, in welchem jeweils einer Ventilklappe (52) zugeordnete Durchtrittsöffnungen ausgebildet sind, wobei vorzugsweise die Durchtrittsöffnungen kleiner sind als die Ventilklappen (52).

9. Abscheider (10) nach einem der vorhergehenden Ansprüche, **dadurch gekennzeichnet, dass** der Luftablass (21) zentral oberhalb der Zentrifugentrommel (18) und/oder im Bereich des Gemischeinlasses (20) angeordnet ist.

10. Abscheider (10) nach einem der vorhergehenden Ansprüche, **dadurch gekennzeichnet, dass** der Gemischverteiler (36) gemeinsam mit der Zentrifugentrommel (18) rotatorisch antreibbar ist.

11. Abscheider (10) nach einem der vorhergehenden Ansprüche, **dadurch gekennzeichnet, dass** der Gemischverteiler (36) als Laufrad mit einer Mehrzahl von insbesondere geschwungenen Trennschaufeln (37) ausgebildet ist, welches vorzugsweise von der Seite gesehen eine konische Form aufweist.

12. Abscheider (10) nach einem der vorhergehenden Ansprüche, **dadurch gekennzeichnet, dass** der mindestens eine Luftkanal (38) parallel zur Drehachse des Gemischverteilers (36) verläuft.

13. Abscheider (10) nach Anspruch 12, **dadurch gekennzeichnet, dass** der Gemischverteiler (36) zumindest teilweise von einem rotationsstarr mit dem Gehäuse (12) verbundenen Verteilergehäuse (40) umgeben ist, welches mit dem Luftablass (21) und/oder dem Gemischeinlass (20) verbunden und vorzugsweise zum Boden der Zentrifugentrommel (18) hin offen ist.

14. Abscheider (10) nach einem der Ansprüche 10 bis 13, **dadurch gekennzeichnet, dass** die Zentrifugentrommel (18) und der Gemischverteiler (36) über eine gemeinsame, drehbar im Gehäuse (12) gelagerte Welle (42) rotatorisch antreibbar sind, welche vorzugsweise durch eine im Boden der Zentrifugentrommel (18) ausgebildete Aussparung hindurchgeführt ist.

15. Abscheider (10) nach einem der vorhergehenden Ansprüche, **dadurch gekennzeichnet, dass** ein Trommeldeckel vorgesehen ist, mittels welchem die aus dem Gehäuse (12) ausgebaute Zentrifugentrommel (18) verschließbar, insbesondere gas- und/oder flüssigkeitsdicht verschließbar ist.

## Claims

1. Separator (10) for separating solids from a wastewater mixture, in particular a dental wastewater mixture, comprising a housing (12) having a cover (14) and a centrifuge drum (18) rotatably mounted in a centrifuge chamber (16) of the housing (12) and rotationally drivable, wherein:
- the housing (12) has a mixture inlet (20) opening into the centrifuge chamber (16) for the wastewater mixture to be separated and a liquid outlet (22) for liquid separated from the wastewater mixture,
- an overflow opening (24) is formed between the upper side of the centrifuge drum (18) and the housing (12) such that liquid from the centrifuge drum (18) can move from the centrifuge drum (18) into an outlet chamber (26) connected to the liquid outlet (22) during the centrifuging process,
- the housing (12) has an air outlet (21) that opens into the centrifuge chamber (16), through which air can be sucked from the region of the mixture inlet (20), the centrifuge drum (18), and/or the overflow opening (24),
- a mixture distributor (36) is rotatably supported within the centrifuge drum (18) and is rotationally drivable, and
- the mixture distributor (36) is configured to distribute the wastewater mixture exiting the mixture inlet (20) in the centrifuge drum (18) and/or to hurl it toward its inner wall,
**characterized in that**
- the mixture distributor (36) comprises at least one continuous air channel (38) and is arranged in the region of the opening of the air outlet (21) such that the air sucked in from the centrifuge drum (18) flows through the at least one air channel (38) into the air outlet (21), and
- the centrifuge drum (18) is configured such that after a centrifuging process, solids sinking under the effect of gravity remain in the centrifuge drum (18), with the centrifuge drum (18) being able to be exposed by opening the cover (14) and being removable from the housing (12) with the collected solids remaining therein.

2. Separator (10) in accordance with claim 1, **characterized in that** a plurality of separating blades (29) are arranged in the region of the overflow opening (24), preferably distributed over the periphery at the centrifuge drum (18), which are configured to hurl the liquid exiting the centrifuge drum (18) at the top during the centrifuging process outwardly in the direction of the outlet chamber (26).

3. Separator (10) in accordance with claim 2, **characterized in that** the separating blades (29) are formed or attached at a flange (28) fixedly or releasably connected to an upper margin of the centrifuge drum (18) and that preferably have a swept form.

4. Separator (10) in accordance with claim 3, **characterized in that** the flange (28) has a web (30) that runs around in the peripheral direction and that runs in a groove (32) formed between the outlet chamber (26) and the centrifuge chamber (16), with the web (30) and the groove (32) preferably forming a labyrinth seal or being a part of such.

5. Separator (10) in accordance with one of the preceding claims, **characterized in that** a sealing element, in particular a peripheral sealing element (50), is provided that separates the outlet chamber (26) from the mixture inlet (20) in an airtight manner and has at least one valve element (52) for the liquid/air separation, with the valve element (52) preferably being configured to permit a passage of liquid and to prevent a passage of air, in particular in combination with a vacuum present in an inner region sealed by the sealing element (50).

6. Separator (10) in accordance with claim 5, **characterized in that** the sealing element (50) is arranged in the region of the overflow opening (24) and separates the outlet chamber (26) from the centrifuge chamber (16) in an airtight manner; or **in that** the sealing element (50) is arranged in the region of a mixture distributor (36) rotatably mounted within the centrifuge drum (18) and separates the outlet chamber (26) from the mixture distributor (36) in an airtight manner, with the valve element (52) preferably being configured to permit a passage of liquid exiting the centrifuge drum (18) or the mixture distributor (36) during the centrifuging process.

7. Separator (10) in accordance with claim 5 or 6, **characterized in that** the sealing element (50) is produced at least sectionally from an elastic material, in particular rubber, with the valve units (52) being formed by valve flaps that can be reversibly outwardly deflected by the liquid passing through and that are preferably formed in one piece in the elastic material.

8. Separator (10) in accordance with claim 7, **characterized in that** the sealing element contacts a separating web (34) arranged in the region of the overflow opening (24) between the sealing element (50) and the centrifuge chamber (16) or a distributor housing (40) that surrounds the mixture distributor (36) and in which passage openings associated with a respective valve flap (52) are formed, with the passage openings preferably being smaller than the valve flaps (52).

9. Separator (10) in accordance with one of the preceding claims, **characterized in that** the air outlet (21) is arranged centrally above the centrifuge drum (18) and/or in the region of the mixture inlet (20).

10. Separator (10) in accordance with one of the preceding claims, **characterized in that** the mixture distributor (36) is rotationally drivable together with the centrifuge drum (18).

11. Separator (10) in accordance with one of the preceding claims, **characterized in that** the mixture distributor (36) is configured as an impeller having a plurality of separating blades, in particular swept separating blades (37), said impeller preferably having a conical form viewed from the side.

12. Separator (10) in accordance with one of the preceding claims, **characterized in that** the at least one air channel (38) preferably extends in parallel with the axis of rotation of the mixture distributor (36).

13. Separator (10) in accordance with claim 12, **characterized in that** the mixture distributor (36) is at least partially surrounded by a distributor housing (40) that is rotationally rigidly connected to the housing (12) and that is connected to the air outlet (21) and/or the mixture inlet (20) and is preferably open toward the base of the centrifuge drum (18).

14. Separator (10) in accordance with one of the claims 10 to 13, **characterized in that** the centrifuge drum (18) and the mixture distributor (36) are rotationally drivable via a common shaft (42) rotatably mounted in the housing (12) preferably led through a cutout formed in the base of the centrifuge drum (18).

15. Separator (10) in accordance with one of the preceding claims, **characterized in that** a drum cover is provided by means of which the centrifuge drum (18) removed from the housing (12) can be closed, in particular closed in a gastight and/or liquid tight manner.

## Revendications

1. Séparateur (10) pour la séparation de matières solides d'un mélange d'eaux usées, notamment dentaires, comprenant un boîtier (12) avec un couvercle (14) et un tambour de centrifugation (18) logé de manière rotative dans une chambre de centrifugation (16) du boîtier (12) et pouvant être entraîné en rotation, dans lequel :
- le boîtier (12) présente une entrée de mélange (20) débouchant dans la chambre de centrifugation (16) pour le mélange d'eaux usées à séparer et une sortie de liquide (22) pour le liquide séparé du mélange d'eaux usées,
- une ouverture de transfert (24) est réalisée entre le côté supérieur du tambour de centrifugation (18) et le boîtier (12) de telle sorte que, pendant le processus de centrifugation, du liquide peut passer du tambour de centrifugation (18) dans une chambre de sortie (26) communiquant avec la sortie de liquide (22),
- le boîtier (12) présente une évacuation d'air (21) débouchant dans la chambre de centrifugation (16), par laquelle de l'air peut être aspiré de la zone de l'entrée de mélange (20), du tambour de centrifugation (18) et/ou de l'ouverture de transfert (24),
- à l'intérieur du tambour de centrifugation (18), un distributeur de mélange (36) est logé de manière rotative et peut être entraîné en rotation, et
- le distributeur de mélange (36) est réalisé pour distribuer le mélange d'eaux usées sortant de l'entrée de mélange (20) dans le tambour de centrifugation (18) et/ou pour le projeter contre sa paroi intérieure,
**caractérisé en ce que**
- le distributeur de mélange (36) comprend au moins un canal d'air continu (38) et est agencé dans la zone de l'embouchure de l'évacuation d'air (21) de telle sorte que l'air aspiré à partir du tambour de centrifugation (18) s'écoule à travers l'au moins un canal d'air (38) dans l'évacuation d'air (21), et
- le tambour de centrifugation (18) est réalisé de telle sorte qu'après un processus de centrifugation, les matières solides qui tombent sous l'effet de la gravité restent dans le tambour de centrifugation (18), le tambour de centrifugation (18) pouvant être libéré par ouverture du couvercle (14) et pouvant être démonté du boîtier (12) en laissant les matières solides qui y sont collectées.

2. Séparateur (10) selon la revendication 1, **caractérisé en ce que** sur le tambour de centrifugation (18), dans la zone de l'ouverture de transfert (24), sont agencées une pluralité de pales de séparation (29) de préférence réparties sur la périphérie, qui sont réalisées pour projeter vers l'extérieur, en direction de la chambre de sortie (26), le liquide qui sort par le haut du tambour de centrifugation (18) pendant le processus de centrifugation.

3. Séparateur (10) selon la revendication 2, **caractérisé en ce que** les pales de séparation (29) sont réalisées ou montées sur une bride (28) qui est reliée de manière fixe ou amovible à un bord supérieur du tambour de centrifugation (18), et présentent de préférence une forme incurvée.

4. Séparateur (10) selon la revendication 3, **caractérisé en ce que** la bride (28) présente une nervure faisant le tour dans la direction circonférentielle (30) qui s'étend dans une rainure (32) réalisée entre la chambre de sortie (26) et la chambre de centrifugation (16), la nervure (30) et la rainure (32) formant de préférence un joint à labyrinthe ou faisant partie d'un tel joint.

5. Séparateur (10) selon l'une quelconque des revendications précédentes, **caractérisé en ce qu'**il est prévu un élément d'étanchéité (50), notamment faisant le tour, qui sépare de manière étanche à l'air la chambre de sortie (26) de l'entrée de mélange (20) et qui présente au moins un élément de soupape (52) pour la séparation liquide/air, l'élément de soupape (52) est de préférence configuré pour permettre un passage de liquide et pour empêcher un passage d'air, notamment en combinaison avec une dépression régnant dans une zone intérieure rendue étanche par l'élément d'étanchéité (50).

6. Séparateur (10) selon la revendication 5, **caractérisé en ce que** l'élément d'étanchéité (50) est agencé dans la zone de l'ouverture de transfert (24) et sépare de manière étanche à l'air la chambre de sortie (26) de la chambre de centrifugation (16) ou **en ce que** l'élément d'étanchéité (50) est agencé dans la zone d'un distributeur de mélange (36) logé de manière rotative à l'intérieur du tambour de centrifugation (18) et sépare de manière étanche à l'air la chambre de sortie (26) du distributeur de mélange (36), l'élément de soupape (52) étant de préférence réalisé pour permettre un passage du liquide sortant du tambour de centrifugation (18) ou du distributeur de mélange (36) pendant le processus de centrifugation.

7. Séparateur (10) selon la revendication 5 ou 6, **caractérisé en ce que** l'élément d'étanchéité (50) est fabriqué au moins par sections en un matériau élastique, notamment en caoutchouc, les éléments de soupape (52) étant formés par des clapets de soupape qui peuvent être déviés de manière réversible vers l'extérieur par le liquide qui les traverse et qui sont de préférence réalisés d'une seule pièce dans le matériau élastique.

8. Séparateur (10) selon la revendication 7, **caractérisé en ce que** l'élément d'étanchéité s'appuie sur une nervure de séparation (34) agencée dans la zone de l'ouverture de transfert (24) entre l'élément d'étanchéité (50) et la chambre de centrifugation (16) ou sur un boîtier de distributeur (40) entourant le distributeur de mélange (36), dans lequel sont réalisées des ouvertures de passage associées respectivement à un clapet de soupape (52), les ouvertures de passage étant de préférence plus petites que les clapets de soupape (52).

9. Séparateur (10) selon l'une quelconque des revendications précédentes, **caractérisé en ce que** l'évacuation d'air (21) est agencée de manière centrale au-dessus du tambour de centrifugation (18) et/ou dans la zone de l'entrée de mélange (20).

10. Séparateur (10) selon l'une quelconque des revendications précédentes, **caractérisé en ce que** le distributeur de mélange (36) peut être entraîné en rotation conjointement avec le tambour de centrifugation (18).

11. Séparateur (10) selon l'une quelconque des revendications précédentes, **caractérisé en ce que** le distributeur de mélange (36) est réalisé sous forme de roue mobile avec une pluralité de pales de séparation (37), notamment incurvées, qui présente de préférence une forme conique vue de côté.

12. Séparateur (10) selon l'une quelconque des revendications précédentes, **caractérisé en ce que** l'au moins un canal d'air (38) s'étend parallèlement à l'axe de rotation du distributeur de mélange (36).

13. Séparateur (10) selon la revendication 12, **caractérisé en ce que** le distributeur de mélange (36) est au moins partiellement entouré par un boîtier de distributeur (40) relié de manière solidaire en rotation au boîtier (12), qui est relié à l'évacuation d'air (21) et/ou à l'entrée de mélange (20) et qui est ouvert de préférence vers le fond du tambour de centrifugation (18).

14. Séparateur (10) selon l'une quelconque des revendications 10 à 13, **caractérisé en ce que** le tambour de centrifugation (18) et le distributeur de mélange (36) peuvent être entraînés en rotation par l'intermédiaire un arbre commun (42) logé de manière rotative dans le boîtier (12), qui traverse de préférence un évidement réalisé dans le fond du tambour de centrifugation (18).

15. Séparateur (10) selon l'une quelconque des revendications précédentes, **caractérisé en ce qu'**il est prévu un couvercle de tambour au moyen duquel le tambour de centrifugation (18) démonté du boîtier (12) peut être fermé, notamment peut être fermé de manière étanche aux gaz et/ou aux liquides.
